# EUROPÄISCHE PATENTSCHRIFT

(11) **EP 1 248 043 B1**
(45) Veröffentlichungstag und Bekanntmachung des Hinweises auf die Patenterteilung: **08.12.2004**
(21) Anmeldenummer: 02004884.9
(22) Anmeldetag: 04.03.2002
(51) Int. Cl.: F23J 13/06, F16L 55/11

(54) **Verschlusseinrichtung für eine Reinigungsöffnung einer Abgasleitungsanordnung**
Closure device for a chimney cleaning aperture
Organe de fermeture d'une trappe de nettoyage de cheminée

(30) Priorität: 27.03.2001 DE 20105317 U
(43) Veröffentlichungstag der Anmeldung: 09.10.2002
(73) Patentinhaber: Joseph Raab GmbH & Cie. KG, 56566 Neuwied (DE)
(72) Erfinder: Karb, Heiner, Dipl.-Ing., 51597 Morsbach- Lichtenberg (DE); Pabst, Manfred, Dipl.-Ing., 56329 St. Goar (DE)
(74) Vertreter: Tiesmeyer, Johannes, Dr.

(56) Entgegenhaltungen:
- DE-A- 3 036 668
- DE-A- 3 907 701
- DE-U- 9 014 330
- DE-U- 9 213 408
- DE-U- 20 009 668
- DE-U- 29 512 738
- FR-A- 940 080
- GB-A- 1 109 915
- US-A- 4 178 966

## Beschreibung

Die Erfindung betrifft eine Verschlusseinrichtung für eine Reinigungsöffnung einer Abgasleitungsanordnung, insbesondere für ein Kaminrohr, mit einem die Reinigungsöffnung definierenden Rohransatz an der Abgasleitungsanordnung und mit einem Verschlussdeckel zum Verschließen des Rohransatzes an dessen Mündung.

Kaminrohrelemente mit einer Reinigungsöffnung und mit einer Verschlusseinrichtung der vorstehend genannten Art sind im Handel erhältlich. Ein solches Kaminrohrelement wird mit weiteren Kaminrohrabschnitten zu einem Kaminrohr vereinigt, welches normalerweise in einem Kaminschacht untergebracht wird. Üblicherweise wird in dem Kaminschacht auch ein Außenrohr untergebracht, welches das abgasführende Kaminrohr umgibt. Der Ringraum zwischen Außenrohr und abgasführendem Innenrohr kann zur Aufnahme von wärmeisolierendem Material genutzt werden. Auch ist es möglich, den Ringraum zwischen dem Innenrohr und dem Außenrohr als Kanal für die Zuführung von Verbrennungsluft zu einem Brenner einer an dem Kaminrohr angeschlossenen Heizungsanlage zu nutzen. Im Bereich der normalerweise mit dem Verschlussdeckel verschlossenen Reinigungsöffnung des abgasführenden Innenrohres weist ein solches Außenrohr üblicherweise eine Außenklappe am Umfang auf. Durch Öffnen dieser Außenklappe erhält der Kaminkehrer Zugang zu der Verschlusseinrichtung der Reinigungsöffnung, so dass er den Verschlussdeckel an dem mündungsseitigen Ende des Rohransatzes entfernen kann, um Zugang zu der Reinigungsöffnung und somit zu dem Inneren des abgasführenden Innenrohres zu erhalten. Bei einer solchen bekannten Abgasanlage ist der Verschlussdeckel als Blechteil mit einer im Wesentlichen ebenen, kreisrunden Basis und einem davon abgewinkelt abstehenden Umfangsrand ausgebildet, so dass er näherungsweise die Form einer Flachschale hat. Zum Verschließen der Reinigungsöffnung wird der Verschlussdeckel auf das mündungsseitige Ende des Rohransatzes aufgesetzt, so dass er mit seinem Randabschnitt das mündungsseitige Ende des Rohransatzes radial außen übergreift. Zwischen dem Verschlussdeckel und dem Rohransatz ist bei der Abgasanlage nach dem Stand der Technik eine Elastomerdichtung vorzusehen, um den Austritt von Abgasen bzw. von Kondensat aus der Reinigungsöffnung zu unterbinden.

Eine Anpresseinrichtung dient dazu, den Verschlussdeckel an den Rohransatz anzupressen und dabei in Verschlussstellung zu fixieren. Die Anpresseinrichtung umfasst ein Schraubgetriebe mit Außengewindeteil und Innengewindeteil, wobei sich eines dieser Gewindeteile an dem Verschlussdeckel abstützt, wohingegen sich das andere Gewindeteil in entgegengesetzter Richtung an einer jochartigen Halterung abstützt, die ortsfest am Kaminrohr befestigt ist. Die Anpresseinrichtung umfasst einen Drehgriff zur Betätigung des Schraubgetriebes. Der Drehgriff ist unmittelbar zugänglich, nachdem die Außenklappe des Außenrohres geöffnet wird.

Es sind auch Varianten bekannt, bei denen ein Außenrohr nicht vorgesehen ist.

Bei den bekannten Abgasanlagen sind das Kaminrohr, der Rohransatz, der Verschlussdeckel und die Anpresseinrichtung aus Edelstahl gebildet.

Aus der DE 9420719 U1 ist eine Verschlusseinrichtung der hier betrachteten Art bekannt, bei der der Verschlussdeckel eine am Umfang umlaufende Sicke aufweist, die in der Verschlussstellung des Verschlussdeckels den axial äußeren Endbereich des Rohransatzes aufnimmt. Zur abgasdichten Abdichtung ist zwischen dem Rohransatz und dem Verschlussdeckel eine Elastomerdichtung in der Deckelsicke vorgesehen. Ein Spannschloss mit Spannbügeln dient dazu, den Verschlussdeckel in seiner Verschlussstellung an dem Rohransatz zu fixieren.

Aufgabe der vorliegenden Erfindung ist es, eine Verschlusseinrichtung der eingangs genannten Art bereitzustellen, welche mit einfachen Mitteln eine zuverlässige und insbesondere temperaturunabhängige Abdichtung der Reinigungsöffnung ermöglicht.

Zur Lösung dieser Aufgabe wird erfindungsgemäß vorgeschlagen, dass der Verschlussdeckel einen Stopfenabschnitt aufweist, der so in den Rohransatz einsteckbar ist, dass er aufgrund unmittelbarer Berührung mit dem Rohransatz diesen elastomerdichtungsfrei abdichten kann.

Beim Einpressen des Stopfenabschnittes des Verschlussdeckels in den Rohransatz kommt es längs einer am Außenumfang des Stopfenabschnittes umlaufenden Berührungslinie zwischen Stopfenabschnitt und Innenfläche des Rohransatzes zu einer dichtend anschmiegenden Berührung des Verschlussdeckels an dem Rohransatz, vorzugsweise mit zumindest geringfügiger Klemmwirkung zwischen Verschlussdeckel und Rohransatz. Der Stopfenabschnitt ist zu diesem Zwecke gemäß einer besonders bevorzugten Ausführungsform der Erfindung zu seinem in den Rohransatz einzuführenden Ende hin konisch verjüngt.

Der Rohransatz kann hohlzylindrisch mit im Wesentlichen konstantem Innendurchmesser sein. In alternativen Varianten kann auch der Rohransatz leicht konisch ausgebildet sein, so dass er zu seinem Mündungsende hin konisch erweitert ist. In diesem Fall sollte die Konizität des Rohransatzes vorzugsweise schwächer sein als die Konizität des Stopfenabschnittes des Verschlussdeckels, um bei möglichst geringer Klemmwirkung eine gute Abdichtung der Reinigungsöffnung sowohl gegen Abgasaustritt als auch gegen Kondensataustritt zu gewährleisten. In einer bevorzugten Ausführungsform der Erfindung ist der Rohransatz über den größten Teil seiner axialen Länge hohlzylindrisch mit gleichbleibendem Durchmesser ausgebildet, wobei er jedoch an seinem Mündungsende radial nach außen hin gebördelt ist. Die Bördelung bietet einen trichterartigen Einführungsbereich des Rohransatzes für den Stopfenabschnitt des Verschlussdeckels. Der Verschlussdeckel kann somit mit seinem Stopfenabschnitt bequem in die Reinigungsöffnung und somit in seine die Reinigungsöffnung abdichtende Position eingeführt werden.

Gemäß einer Ausführungsform der Erfindung weist auch der Verschlussdeckel einen radial nach außen gebördelten Rand auf, der den Rand des Rohransatzes zumindest teilweise außen übergreift, wenn der Stopfenabschnitt in seiner die Reinigungsöffnung abdichtenden Position in dem Rohrabschnitt sitzt.

Üblicherweise wird die Reinigungsöffnung, d.h. die Mündung des Rohransatzes kreisrund sein, so dass in passender Weise auch der Verschlussdeckel kreisrund auszubilden sein wird. Bei dem Verschlussdeckel handelt es sich in einer besonders bevorzugten Ausgestaltung um ein einstückiges Blechformteil, welches aus einem flachen Blechzuschnitt durch einen Tiefziehprozess seine Form aus Stopfenabschnitt und Randsaum erhalten hat.

Als Material für den Verschlussdeckel kommt insbesondere Metall, vorzugsweise Edelstahl, in Frage, wenngleich auch ein System aus Kupfer, Messing oder dgl. Verwendung finden könnte.

Auch der Rohransatz ist vorzugsweise aus Metall, insbesondere aus Edelstahl, gefertigt.

Eine an sich bekannte Anpresseinrichtung zum Anpressen des Verschlussdeckels an den Rohransatz ist vorzugsweise vorgesehen, um den Verschlussdeckel in seiner Verschlussstellung zu fixieren. Die Anpresseinrichtung weist in einer Ausführungsform ein einerseits an dem Verschlussdeckel und andererseits an dem Rohransatz und/oder an der Abgasleitungsanordnung abzustützendes Schraubgetriebe auf, mittels welchem eine axiale Anpresskraft auf den Verschlussdeckel ausgeübt werden kann.

Allgemein bietet die vorliegende Erfindung die Möglichkeit einer im Wesentlichen temperaturunabhängigen und zuverlässigen abgas- und kondensatdichten Abdichtung der Reinigungsöffnung einer Abgasleitungsanordnung ohne Einsatz von gesonderten Dichtungsmaterialien, wie etwa Elastomerdichtungselementen bzw. mineralischen Dichtungselementen.

Die Verschlusseinrichtung kann bei Abgasanlagen verwendet werden, die im Überdruckbetrieb arbeiten, wobei sie überdruckdicht und kondensatdicht ist. Andererseits ist eine Verwendung der Verschlusseinrichtung nach der Erfindung selbstverständlich auch in Unterdruck-Abgasanlagen möglich.

Die Erfindung wird im Folgenden unter Bezugnahme auf die Figuren näher erläutert.
- Fig. 1: zeigt in einer schematischen Teilschnittdarstellung ein Kaminrohrelement mit seitlichem Rohransatz und einer Verschlusseinrichtung nach der Erfindung.
- Fig. 2: zeigt ein in Fig. 1 mit II gekennzeichnetes Detail in vergrößerter Darstellung.

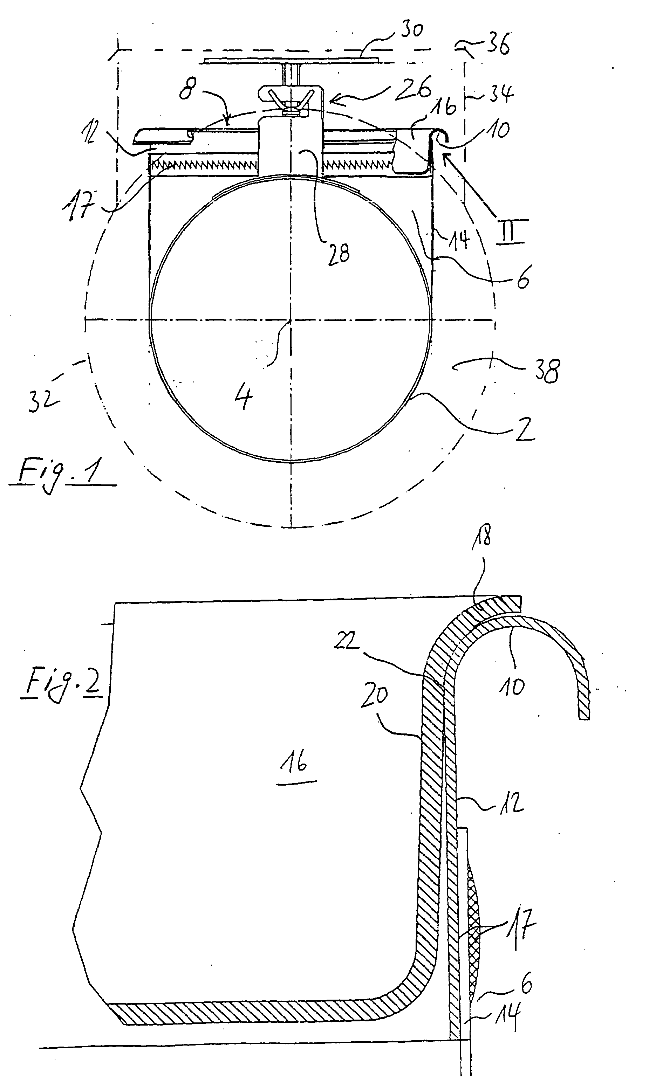

Fig. 1 zeigt ein Kaminrohrelement 2, wie es zur Abgasabführung in Abgasanlagen von Heizeinrichtungen, beispielsweise Brennwertheizeinrichtungen, eingesetzt wird. Im Wesentlichen orthogonal zur Achse 4 des Kaminrohres 2 erstreckt sich in dem Beispielsfall gemäß Fig. 1 ein Rohransatz 6 seitlich von dem Kaminrohr 2 nach außen. Der Rohransatz 6 begrenzt mit seinem Innenumfang eine Reinigungsöffnung 8, welche den Zugriff zu dem Inneren des Kaminrohres 2 für Reinigungsarbeiten ermöglicht.

Wie insbesondere aus Fig. 2, welche das in Fig. 1 mit II. gekennzeichnete Detail vergrößert darstellt, zu ersehen ist, hat der Rohransatz 6 an seinem Mündungsende eine radial nach außen gekrümmte Bördelung 10. Die Bördelung 10 befindet sich im Beispielsfall der Figuren 1 und 2 an einem ringförmigen Endabschnitt 12, welcher mit dem nicht konischen Abschnitt 14 des Rohransatzes 6 bei 17 verschweißt ist.

Die Reinigungsöffnung 8 ist von einem Verschlussdeckel 16 verschlossen, welcher einen gekrümmten Randbereich 18 und einen Stopfenabschnitt 20 aufweist, welcher konisch verjüngt ist, wie dies in Fig. 2 erkennbar ist. Der Verschlussdeckel 16 ist mit seinem Stopfenabschnitt 20 abdichtend in die Mündung des Rohrabschnittes 6 eingesteckt worden, wobei es längs einer am Außenumfang des Verschlussdeckels 16 umlaufenden Berührungslinie (etwa bei 22 in Fig. 2) zu einer dichtend anschmiegenden Berührung zwischen Verschlussdeckel 16 und Rohransatz 6 mit geringer Klemmwirkung gekommen ist. Der Rand 18 des Verschlussdeckels 16 übergreift am axial äußeren Ende des Rohransatzes 6 den Bördelrand 10.

In der in den Figuren 1 und 2 dargestellten Verschlussstellung des Verschlussdeckels 16 an dem Rohransatz 6 ist die Reinigungsöffnung 8 zuverlässig gegen Austritt von Abgasen und Abgaskondensat abgedichtet.

Eine optionale Anpresseinrichtung 26 dient dazu, den Verschlussdeckel 16 in der Verschlussstellung zu fixieren. Die an sich bekannte Anpresseinrichtung 26 umfasst ein Schraubgetriebe, welches einerseits axial an dem Verschlussdeckel 16 und andererseits an einer jochartigen Halterung 28 abgestützt ist, welche an dem Kaminrohr 2 befestigt ist. Durch Drehen des Drehgriffes 30 kann die Anpresseinrichtung manuell betätigt werden. Dabei kann je nach Drehsinn der Drehung eine Vorschubkraft oder eine Rückzugskraft auf den Verschlussdeckel 16 ausgeübt werden.

Mit unterbrochenen Linien ist in Fig. 1 ein Außenrohr 32 angedeutet, welches in Höhe des Rohransatzes 6 einen Ansatz 34 mit einer Außenklappe 36 aufweist. Die Außenklappe 36 kann geöffnet werden, um den Zugang zu dem Drehgriff 30 und der Verschlusseinrichtung zu ermöglichen. Sofern solch ein Außenrohr 32 mit dem Kaminrohr 2 verwendet wird, kann der Ringspalt 38 zwischen dem Innenrohr 2 und dem Außenrohr 32 zur Aufnahme von wärmedämmendem Material genutzt werden. Alternativ kann der Ringspalt 38 auch als Zuluftkanal genutzt werden.

Vorzugsweise bestehen die in Fig. 1 gezeigten und vorstehend beschriebenen Elemente aus Edelstahl.

## Patentansprüche

1. Verschlusseinrichtung für eine Reinigungsöffnung (8) einer Abgasleitungsanordnung (2), insbesondere für ein Kaminrohr, mit einem die Reinigungsöffnung (8) definierenden Rohransatz (6) an der Abgasleitungsanordnung (2) und mit einem Verschlussdeckel (16) zum Verschließen des Rohransatzes (6) an dessen Mündung,
**dadurch gekennzeichnet,**
**dass** der Verschlussdeckel (16) einen Stopfenabschnitt (20) aufweist, der so in den Rohransatz (6) einsteckbar ist, dass er aufgrund unmittelbarer Berührung mit dem Rohransatz (6) diesen elastomerdichtungsfrei abdichten kann.

2. Verschlusseinrichtung nach Anspruch 1, **dadurch gekennzeichnet, dass** der Stopfenabschnitt (20) zu seinem in den Rohransatz (6) einzuführenden Ende hin konisch verjüngt ist.

3. Verschlusseinrichtung nach Anspruch 1 oder 2, **dadurch gekennzeichnet, dass** der Rohransatz (6) einen radial nach außen gebördelten Rand (10) am Mündungsende aufweist.

4. Verschlusseinrichtung nach Anspruch 3, **dadurch gekennzeichnet, dass** der Verschlussdeckel (16) einen radial nach außen gekrümmten Rand aufweist, der den Rand des Rohransatzes (6) zumindest teilweise außen übergreift.

5. Verschlusseinrichtung nach einem der vorhergehenden Ansprüche, **dadurch gekennzeichnet, dass** der Rohransatz (6) hohlzylindrisch und der Verschlussdeckel (16) kreisrund ist.

6. Verschlusseinrichtung nach einem der vorhergehenden Ansprüche, **dadurch gekennzeichnet, dass** der Verschlussdeckel (16) ein Blechformteil ist.

7. Verschlusseinrichtung nach einem der vorhergehenden Ansprüche, **dadurch gekennzeichnet, dass** der Verschlussdeckel (16) aus einem Metall, insbesondere aus Edelstahl, besteht.

8. Verschlusseinrichtung nach einem der vorhergehenden Ansprüche, **dadurch gekennzeichnet, dass** der Rohransatz (6) aus einem Metall, insbesondere aus Edelstahl, besteht.

9. Verschlusseinrichtung nach einem der vorhergehenden Ansprüche, **dadurch gekennzeichnet, dass** der Rohransatz (6) und der Verschlussdeckel (16) aus gleichen Materialien bestehen.

10. Verschlusseinrichtung nach einem der vorhergehenden Ansprüche, **gekennzeichnet durch** eine Anpresseinrichtung (26) zum Anpressen des Verschlussdeckels (16) an den Rohransatz (6).

11. Verschlusseinrichtung nach Anspruch 10, **dadurch gekennzeichnet, dass** die Anpresseinrichtung ein einerseits an dem Verschlussdeckel (16) und andererseits an dem Rohransatz (6) und/oder an der Abgasleitungsanordnung (2) abzustützendes Schraubgetriebe aufweist, mittels welchem eine axiale Anpresskraft auf den Verschlussdeckel (16) ausgeübt werden kann.

## Claims

1. A closure device for a cleaning opening (8) of a flue gas duct assembly (2), in particular for a chimney pipe, having a pipe attachment (6) on the flue gas duct assembly (2) defining the cleaning opening (8), and having a closure cover (16) for closing the pipe attachment (6) at its orifice, **characterised in that** the closure cover (16) has a plug portion (20) which can be inserted into the pipe attachment (6) in such a way that as a result of the direct contact with the pipe attachment (6) it can seal the latter without an elastomeric seal.

2. A closure device according to Claim 1, **characterised in that** the plug portion (20) tapers towards its end which is to be inserted into the pipe attachment (6).

3. A closure device according to Claim 1 or 2, **characterised in that** at the orifice end the pipe attachment (6) has a radially outwardly flanged rim (10).

4. A closure device according to Claim 3, **characterised in that** the closure cover (16) has a radially outwardly curved rim which outwardly at least partly overlaps the rim of the pipe attachment (6).

5. A closure device according to any one of the preceding Claims, **characterised in that** the pipe attachment (6) is hollow cylindrical and the closure cover (16) is circular.

6. A closure device according to any one of the preceding Claims, **characterised in that** the closure cover (16) is a sheet material shaped part.

7. A closure device according to any one of the preceding Claims, **characterised in that** the closure cover (16) consists of metal, in particular of high-grade steel.

8. A closure device according to any one of the preceding Claims, **characterised in that** the pipe attachment (6) consists of metal, in particular of high-grade steel.

9. A closure device according to any one of the preceding Claims, **characterised in that** the pipe attachment (6) and the closure cover (16) consist of like materials.

10. A closure device according to any one of the preceding Claims, **characterised by** a pressing means (26) for pressing the closure cover (16) on to the pipe attachment (6).

11. A closure device according to Claim 10, **characterised in that** the pressing means has a screw mechanism bearing, on one side, against the closure cover (16) and, on the other side, against the pipe attachment (6) and/or against the flue gas duct assembly (2), by means of which screw mechanism an axial contact force can be applied on to the closure cover (16).

## Revendications

1. Dispositif de fermeture pour une ouverture de nettoyage (8) d'un système de conduit de gaz d'échappement (2), en particulier un conduit de cheminée, comprenant un manchon tubulaire (6), délimitant l'ouverture de nettoyage (8) et posé sur le système de conduit de gaz d'échappement (2), et un couvercle de fermeture (16) destiné à obturer la bouche du manchon tubulaire (6), **caractérisé en ce que** le couvercle de fermeture (16) comporte une partie formant bouchon (20) qui peut être introduite dans le manchon tubulaire (6), de telle sorte que, par le contact direct avec le manchon tubulaire (6), ladite partie formant bouchon assure l'étanchéité de ce dernier sans garniture d'étanchéité élastomère.

2. Dispositif de fermeture selon la revendication 1, **caractérisé en ce que** la partie formant bouchon (20) se rétrécit en forme de cône vers son extrémité à introduire dans le manchon tubulaire (6).

3. Dispositif de fermeture selon la revendication 1 ou 2, **caractérisé en ce que** le manchon tubulaire (6) comporte au niveau de l'extrémité de la bouche un bord (10) replié radialement vers l'extérieur.

4. Dispositif de fermeture selon la revendication 3, **caractérisé en ce que** le couvercle de fermeture (16) comporte un bord coudé radialement vers l'extérieur, qui à l'extérieur couvre au moins partiellement le bord du manchon tubulaire (6).

5. Dispositif de fermeture selon l'une quelconque des revendications précédentes, **caractérisé en ce que** le manchon tubulaire (6) est cylindrique creux et le couvercle de fermeture (16) est circulaire.

6. Dispositif de fermeture selon l'une quelconque des revendications précédentes, **caractérisé en ce que** le couvercle de fermeture (16) est une pièce moulée en tôle.

7. Dispositif de fermeture selon l'une quelconque des revendications précédentes, **caractérisé en ce que** le couvercle de fermeture (16) est réalisé en métal, en particulier en acier inoxydable.

8. Dispositif de fermeture selon l'une quelconque des revendications précédentes, **caractérisé en ce que** le manchon tubulaire (6) est réalisé en métal, en particulier en acier inoxydable.

9. Dispositif de fermeture selon l'une quelconque des revendications précédentes, **caractérisé en ce que** le manchon tubulaire (6) et le couvercle de fermeture (16) sont réalisés dans le même matériau.

10. Dispositif de fermeture selon l'une quelconque des revendications précédentes, **caractérisé par** un dispositif de pression (26) destiné à presser le couvercle de fermeture (16) contre le manchon tubulaire (6).

11. Dispositif de fermeture selon la revendication 10, **caractérisé en ce que** le dispositif de pression comporte un engrenage hélicoïdal, qui vient en appui, d'une part, sur le couvercle de fermeture (16) et, d'autre part, sur le manchon tubulaire (6) et/ou sur le système de conduit d'échappement (2), et au moyen duquel une force de pression peut être exercée sur le couvercle de fermeture (16).
